# EUROPEAN PATENT APPLICATION

(11) **EP 4 675 534 A1**
(43) Date of publication of application: **07.01.2026**
(21) Application number: 25182770.5
(22) Date of filing: 13.06.2025
(51) Int. Cl.: G06Q 20/20, G07G 1/00

(54) **POINT-OF-SALE TERMINAL, CHECKOUT SYSTEM, AND STORAGE MEDIUM**

(30) Priority: 03.07.2024 JP 2024107532
(71) Applicant: Toshiba TEC Kabushiki Kaisha, Tokyo 141-8562 (JP)
(72) Inventor: Muto, Takuya, Tokyo, 141-8562 (JP)
(74) Representative: Bandpay & Greuter

(57) **Abstract**

A point-of-sale terminal includes a table, a weight sensor, a camera, a memory storing commodity information each indicating a commodity and a weight range and a preset image thereof, and a processor configured to: determine whether an operation for registering a first commodity is input, upon determining that the operation is input, search the memory for first commodity information corresponding to the first commodity, determine whether a weight measured by the sensor increases, upon determining that the weight increases, determine whether an increase in the weight is within a first range indicated by the first commodity information, and upon determining that the increase is not within the range, determine whether an image captured by the camera shows the first commodity based on a first preset image indicated by the first commodity information, and upon determining that the image shows the first commodity, register the first commodity.

## Description

### FIELD

Embodiments described herein relate generally to a point-of-sale (POS) terminal, a checkout system, and a storage medium.

### BACKGROUND

In recent years, in retail stores such as supermarkets, a self-service commodity sales data processing apparatus such as a self-service POS terminal with which purchasers can perform registration of purchased commodities and payment for the transaction by themselves has been widely used. The retail stores can obtain advantages such as solving a labor shortage and reducing labor cost by introducing such a self-service commodity sales data processing apparatus. On the other hand, there is concern over fraud such as bagging purchased commodities without registration or bagging a more expensive commodity swapped for a registered commodity. To detect such fraudulent activities, there is a technique of providing a scale in a table for bagging to detect fraud based on the registration of the commodities and the weight load changes on the table.

In the related fraud detection technique using a scale, however, an error can occur even though a purchaser correctly registers and bags a commodity because the measured weight of the commodity does not always exactly match the expected reference weight of the registered commodity.

### DISCLOSURE OF THE INVENTION

The problem to be solved by the present invention is to provide a POS terminal and a checkout system product sales data processing device that enable smooth product registration by minimizing errors in the registration even though the purchaser has correctly registered products while detecting fraudulent acts.

### BRIEF DESCRIPTION OF THE DRAWINGS

FIG. 1 is a schematic configuration diagram of a self-checkout system according to one embodiment.
FIG. 2 is a schematic diagram showing a data structure of a commodity record stored in a commodity master file.
FIG. 3 is a perspective view of a commodity sales data processing apparatus.
FIG. 4 is a block diagram of the commodity sales data processing apparatus.
FIG. 5 is a block diagram showing a functional configuration of the commodity sales data processing apparatus.
FIG. 6 is a flowchart representing information processing executed by the commodity sales data processing apparatus according to a first embodiment.
FIG. 7 is a flowchart representing the information processing executed by the commodity sales data processing apparatus according to the first embodiment.
FIG. 8 is a flowchart representing information processing of a first case in which a measured weight becomes out of a standard weight range.
FIG. 9 is a flowchart representing information processing of a second case in which a measured weight is out of the standard weight range.
FIG. 10 is a flowchart representing information processing executed by a commodity sales data processing apparatus according to a second embodiment.
FIG. 11 is a flowchart representing information processing executed by a commodity sales data processing apparatus according to a third embodiment.

### DETAILED DESCRIPTION

Embodiments of the present disclosure provide a POS terminal, a checkout system, and a storage medium which make it possible to realize improved commodity registration.

In general, according to one embodiment, a POS terminal comprises a first table on which one or more commodities that have been registered for purchase can be placed, a weight sensor disposed in or under the first table, a camera positioned to image the first table, a memory that stores a program and a plurality of commodity information each indicating a commodity, a weight range of the commodity, and a preset image of the commodity, and a processor configured to execute the program to: determine whether a first operation for registering a first commodity is input, upon determining that the first operation is input, search the memory for first commodity information corresponding to the first commodity, determine whether a weight measured by the weight sensor increases after the first operation, upon determining that the measured weight increases, determine whether an increase in the measured weight is within a first weight range indicated by the first commodity information, upon determining that the increase is within the first weight range, register the first commodity, and upon determining that the increase is not within the first weight range, determine whether a first image captured by the camera after the first operation shows the first commodity based on a first preset image indicated by the first commodity information, upon determining that the first image shows the first commodity, register the first commodity, and upon determining that the first image does not show the first commodity, issue an error signal.

Hereinafter, some embodiments of a self-service commodity sales data processing apparatus will be described with reference to the drawings. Such a self-service commodity sales data processing apparatus makes it possible to realize smooth commodity registration by suppressing errors that occur when the purchaser correctly registers the commodity.

### <First Embodiment>

### [Description of Checkout System]

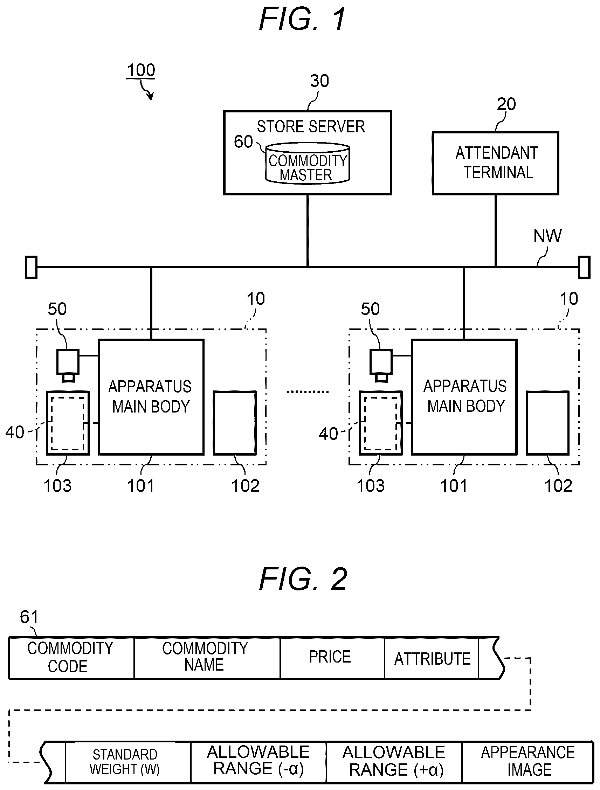

First, a self-service checkout system 100 including a self-service commodity sales data processing apparatuses 10 according to a first embodiment will be described with reference to FIG. 1 and FIG. 2.

FIG. 1 is a schematic configuration diagram of the self-service checkout system 100. For example, the self-service checkout system 100 is used by a retail store such as a supermarket. The self-service checkout system 100 includes a plurality of commodity sales data processing apparatuses 10, an attendant terminal 20, and a store server 30. The self-service checkout system 100 connects each of the commodity sales data processing apparatuses 10, the attendant terminal 20, and the store server 30 with a communication network NW. The communication network NW is, for example, a LAN (Local Area Network). The LAN may be a wired LAN, or may be a wireless LAN. Alternatively, the Internet may be included as the communication network NW to place the store server 30 in a cloud environment.

The commodity sales data processing apparatuses 10 are installed in checkout lanes separated from a sales floor where commodities are displayed. The commodity sales data processing apparatus 10 includes an apparatus main body 101, a first commodity loading table 102 and a second commodity loading table 103 arranged at the left and right sides of the apparatus main body 101, a weighing scale 40 provided in the second commodity loading table 103, and a camera 50.

The commodity sales data processing apparatus 10 is a self-service POS terminal with which purchasers can perform registration of purchased commodities and payment for the transaction by themselves. The purchaser who ends the shopping on the sales floor and moves to the checkout lane first places the purchased commodities on the first commodity loading table 102. Further, the purchaser sets their own bag, a plastic store bag, or the like on the second commodity loading table 103. Subsequently, the purchaser picks up the purchased commodities one by one to register each item using the apparatus main body 101, and then performs bagging on the second commodity loading table 103. When the purchaser ends the registration and the bagging of all the purchased commodities, the purchaser operates the apparatus main body 101 to perform payment for the purchased commodities by him- or herself. The commodity sales data processing apparatus 10 of this kind is also called a self-service checkout machine.

The attendant terminal 20 is an information processing apparatus for a clerk (called an attendant) to monitor states of the plurality of commodity sales data processing apparatuses 10 connected with the communication network NW. In general, the attendant terminal 20 has a display. The attendant terminal 20 displays information necessary for monitoring each of the commodity sales data processing apparatuses 10 on the display. The information to be displayed includes information of an error detected by the commodity sales data processing apparatuses 10. It should be noted that although a single attendant terminal 20 is shown in FIG. 1, two or more attendant terminals 20 may be incorporated in the self-service checkout system 100 in accordance with the number of commodity sales data processing apparatuses 10 to be monitored.

The store server 30 is a server apparatus which manages data of each commodity sold in the retail store in an integrated fashion to thereby control registration processing of the purchased commodities performed by each of the commodity sales data processing apparatuses 10, and thus, collects the data on which the registration processing is performed to tally the sales, stock, and so on of the entire store. The store server 30 has a commodity master file 60. The commodity master file 60 stores a commodity record 61 (see FIG. 2) generated for each commodity.

FIG. 2 is a schematic diagram showing a data structure of the commodity record 61. As shown in the drawings, the commodity record 61 includes item data of a commodity code, a commodity name, a price, an attribute, a standard weight (W), a first allowable range (-α), a second allowable range (+α), and an appearance image. The commodity code is unique identification information set for each commodity in order to identify each of the commodities. Incidentally, in most commodities, a barcode symbol which represents the commodity code is attached. However, in some commodities such as vegetables, fruits, and prepared dishes, no barcode symbol is attached.

The commodity name and the price are an item name and a unit price of the commodity identified by the commodity code. The attribute is information representing properties of that commodity. For example, information for identifying whether the commodity is an object of taxation or a tax-free article and information for identifying whether the commodity is attached with the barcode symbol or the commodity is not attached therewith exist as the attribute.

The standard weight (W), the first allowable range (-α), and the second allowable range (+α) are information related to the weight of the commodity identified by the commodity code. Many commodities such as prepackaged foods and commodities for daily use sold in supermarkets or the like are substantially uniform in weight within an individual product type. In this context, the standard weight (W) is that uniform or expected weight of an item. However, some commodities such as fresh vegetables, fruits, meats, and fishes vary in weight on an individual product basis much more item to item. For such commodities, the first allowable range (-α) as a lower limit value of the variation and the second allowable range (+α) as an upper limit value of the variation are set accordingly.

The appearance image is data of images of an appearance of the commodity identified by the commodity code taken from a variety of directions. The appearance image may be information obtained by expressing characteristics such as a shape, a color shade of the surface, a pattern, and a contrast of an expected or standard appearance of the commodity as parameterized values.

Incidentally, for a commodity type which varies in weight of individual product, the first allowable range (-α) and the second allowable range (+α) are set centering on the standard weight (W), but an irregular product out of the allowable range may still be sold in some cases. Therefore, as the attribute, information indicating whether the commodity is possibly an irregular product may be included.

### [Description of Configuration of Commodity Sales Data Processing Apparatus]

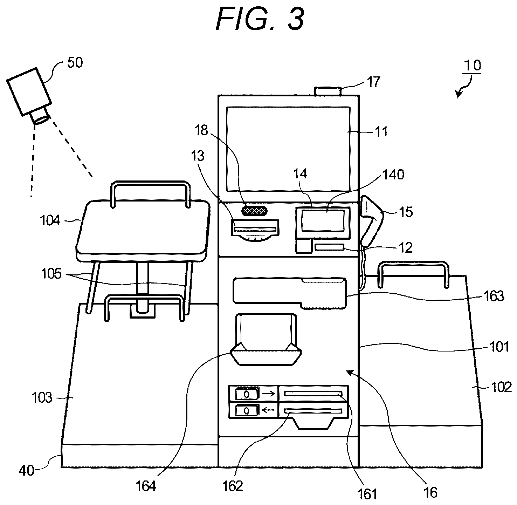

FIG. 3 is a perspective view of the commodity sales data processing apparatus 10. The commodity sales data processing apparatus 10 includes the apparatus main body 101, and the first commodity loading table 102 and the second commodity loading table 103 arranged at the left and right sides of the apparatus main body 101. The first commodity loading table 102 arranged at the right side viewed from an operator (i.e., a customer or a purchaser) facing the apparatus main body 101 is a table for placing commodities to be registered. The commodities to be registered are normally put into a shopping basket and placed on the first commodity loading table 102. The commodities to be registered may be arranged above the first commodity loading table 102 in a state of being stacked in a shopping cart.

The second commodity loading table 103 arranged at the left side viewed from the operator is a table for placing registered commodities. The registered commodities are stored in a container such as a shopping basket, a plastic store bag, or the customer's bag placed on the second commodity loading table 103. The registered commodities may be placed directly on the second commodity loading table 103. A temporary rest 104 is disposed above the second commodity loading table 103 via a support post. The temporary rest 104 is a rest for temporary placing a registered commodity, for example, before putting the commodity into the plastic store bag or the like. The temporary rest 104 has two holding arms 105 at a distance in a right-left direction. The purchaser can place the plastic store bag, the own bag, or the like in an open state on the second commodity loading table 103 using these holding arms 105.

In the commodity sales data processing apparatus 10, the weighing scale 40 is disposed in or under the second commodity loading table 103. The weighing scale 40 is a weight sensor that weighs a total weight of the commodities respectively placed on the second commodity loading table 103 and the temporary rest 104.

In the commodity sales data processing apparatus 10, the camera 50 is disposed above the second commodity loading table 103. The camera 50 is positioned to image an upper surface of the second commodity loading table 103 within its imaging area. The camera 50 is suitable for taking pictures of the commodities bagged on the second commodity loading table 103.

It should be noted that the first commodity loading table 102 may be attached at the left side to the apparatus main body 101, and the second commodity loading table 103 may be attached at the right side. In that case, the attachment position of the camera 50 is also set to the right side of the apparatus main body 101.

The apparatus main body 101 includes a touch panel 11, a card reader 12, a printer 13, a scanner 14, a hand scanner 15, a cash processing machine 16, a lamp 17, a speaker 18, and so on as input and output devices.

The touch panel 11 includes a display as a display device, and a touch sensor as an input device. The display displays a variety of types of screen information such as a settlement start screen, a commodity registration screen, a barcode-less commodity list screen, a payment method selection screen, and a settlement finish screen. The settlement start screen is a screen for receiving a start of settlement of the transaction. In the settlement start screen, there is arranged a start key for making a command to start the settlement of the transaction. The purchaser who starts the registration of the purchased commodities touches the start key. When the touch sensor detects that a touch operation is performed on the start key, the commodity sales data processing apparatus 10 switches the screen of the display from the settlement start screen to the commodity registration screen.

The commodity registration screen is a screen which displays description information such as a commodity name, a price, and a total amount of the commodities registered. In the commodity registration screen, there is arranged a payment key for making a command to make the transition to the payment for the commodities registration of which is finished. The purchaser who finishes the registration of the commodities touches the payment key. When the touch sensor detects that a touch operation is performed on the payment key, the commodity sales data processing apparatus 10 switches the screen of the display from the commodity registration screen to the payment method selection screen.

The barcode-less commodity list screen is a screen which displays a list of commodities to which no barcode symbol is attached. On the commodity registration screen, there is arranged a barcode-less key for making a command to register the commodity without any barcode symbol. When the commodity which is picked up from the first commodity loading table 102 does not have any barcode symbol, the purchaser touches the barcode-less key. When the touch sensor detects that a touch operation is performed on the barcode-less key, the commodity sales data processing apparatus 10 switches the screen of the display from the commodity registration screen to the barcode-less commodity list screen. The purchaser performs a touch operation for selecting the commodity from a list on the barcode-less commodity list screen. In response to this touch operation, the commodity sales data processing apparatus 10 accepts the registration of the selected commodity.

The payment method selection screen is a screen for receiving selection input of the payment method such as cash payment, credit card payment, electronic money payment, or code settlement payment. On the payment method selection screen, there are arranged a cash key for making a command to perform the cash payment, a credit key for making a command to perform the credit card payment, an electronic money key for making a command to perform the electronic money payment, a code settlement key for making a command to perform the code settlement payment, and so on. The purchaser touches a key of the desired payment method. For example, when the touch sensor detects that a touch operation is performed on the cash key, the commodity sales data processing apparatus 10 executes cash settlement processing, and then switches the screen of the display from the payment method selection screen to the cash settlement finish screen. When the touch sensor detects that a touch operation is performed on the credit key, the commodity sales data processing apparatus 10 executes credit card settlement processing, and then switches the screen of the display from the payment method selection screen to the credit card settlement finish screen. When the touch sensor detects that a touch operation is performed on the electronic money key, the commodity sales data processing apparatus 10 executes electronic money card settlement processing, and then switches the screen of the display from the payment method selection screen to the electronic money card settlement finish screen. When the touch sensor detects that a touch operation is performed on the code settlement key, the commodity sales data processing apparatus 10 executes settlement processing with a code for code settlement, and then switches the screen of the display from the payment method selection screen to the code settlement payment finish screen.

For example, the cash settlement processing is processing of subtracting the total amount of the transaction from a deposit amount to obtain a change amount, and then issuing a receipt to finish the transaction. The cash settlement finish screen is a screen for displaying the total amount of the transaction, the cash deposit amount, the change amount, and so on. Since such settlement processing and settlement finish screen are well-known, the detailed descriptions will be omitted. Similarly, the settlement processing with the credit card, the electronic money card, or the code settlement and the settlement finish screen are also well-known, and therefore, the description here will be omitted.

The card reader 12 is a device for reading data recorded on a card medium such as a credit card, an electronic money card, or a reward card. When the card medium is a magnetic card, the card reader 12 is a magnetic card reader. When the card medium is an IC card, the card reader 12 is an IC card reader. The commodity sales data processing apparatus 10 may include either one of the magnetic card reader and the IC card reader as the card reader 12, or may include both. The card reader 12 may be a card reader writer having a function of writing data to a card.

The printer 13 is a device which prints data related to a purchase receipt, a credit card slip, or the like on a receipt sheet. The receipt sheet on which a variety of types of data is printed by the printer 13 is cut by a cutter, and is then issued from a receipt issuance port. The printer 13 is realized by, for example, a thermal printer or a dot impact printer.

The scanner 14 and the hand scanner 15 are what read a barcode of the barcode symbol attached to a commodity. The scanner 14 reads the barcode of the barcode symbol put over a reading window 140 so as to face the reading window 140. The hand scanner 15 is what is operated in hand by the purchaser, and reads the barcode by being put close to the barcode symbol.

The cash processing machine 16 is for processing cash. The cash processing machine 16 has a bill slot 161, a bill discharge port 162, a coin slot 163, and a coin discharge port 164. The cash processing machine 16 processes bills put into the bill slot 161. The cash processing machine 16 discharges bills as the change from the bill discharge port 162. The cash processing machine 16 receives and then processes coins put into the coin slot 163. The cash processing machine 16 discharges coins as the change from the coin discharge port 164.

The lamp 17 selectively emits, for example, blue light and red light. The clerk such as an attendant is informed, by the color of the light emitted by the lamp 17, of a current state of the commodity sales data processing apparatus 10 such as whether the commodity sales data processing apparatus 10 is in an idle state, whether the commodity sales data processing apparatus 10 is in an operating state, whether an error is occurring.

The speaker 18 outputs a notification sound for announcing completion of reading of a barcode, a warning sound as an alert, a synthesized voice as a message, or the like.

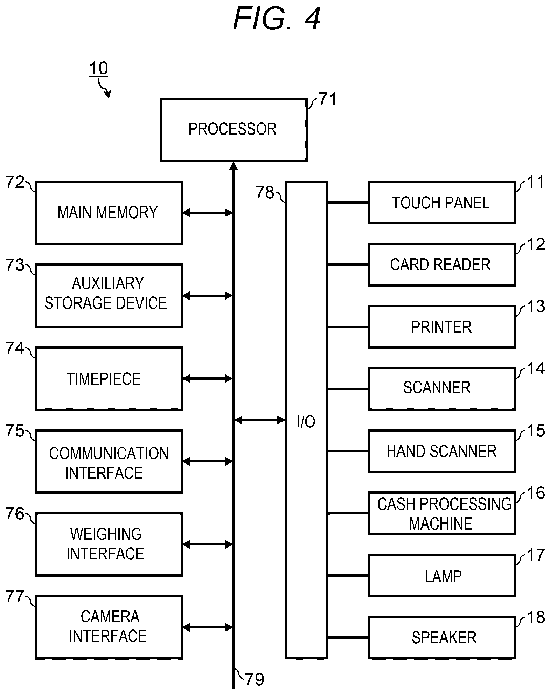

FIG. 4 is a block diagram of the commodity sales data processing apparatus 10. The commodity sales data processing apparatus 10 includes a processor 71, a main memory 72, an auxiliary storage device 73, a timepiece 74, a communication interface 75, a weighing scale interface 76, a camera interface 77, an I/O (Input/Output) interface 78, a system transmission path 79, and so on. The system transmission path 79 includes an address bus, a data bus, control signal lines, and so on. The processor 71, the main memory 72, the auxiliary storage device 73, the timepiece 74, the communication interface 75, the weighing interface 76, the camera interface 77, and the I/O interface 78 are connected to each other via the system transmission path 79.

The processor 71 controls each unit so as to realize a variety of functions as the commodity sales data processing apparatus 10 with an operating system or an application program or application software. The processor 71 is, for example, a CPU (Central Processing Unit).

The main memory 72 includes a nonvolatile memory area and a volatile memory area. The nonvolatile memory area of the main memory 72 stores the operating system or the application program. The nonvolatile or the volatile memory area of the main memory 72 stores data which is necessary for the processor 71 to execute processing for controlling each unit. The processor 71 uses the volatile memory area as a work area in which data is rewritten as appropriate. The nonvolatile memory area is, for example, a ROM (Read Only Memory). The volatile memory area is, for example, a RAM (Random Access Memory).

The auxiliary storage device 73 is, for example, an EEPROM (a registered trademark) (Electrically Erasable Programmable Read-Only Memory), an HDD (Hard Disc Drive), or an SSD (Solid State Drive). The auxiliary storage device 73 stores data which is used by the processor 71 when performing a variety of types of processing, data which is generated by the processing in the processor 71, or the like. The auxiliary storage device 73 stores the application program described above in some cases.

The timepiece 74 is a clock circuit that measures the date and the time. The commodity sales data processing apparatus 10 acquires the date and the time measured by the timepiece 74 as the current date and time.

The communication interface 75 is a circuit for performing transmission and reception of data signals with the attendant terminal 20, the store server 30, and so on connected via the communication network NW. The weighing scale interface 76 is a circuit for performing transmission and reception of data signals with the weighing scale 40. The camera interface 77 is a circuit for performing transmission and reception of data signals with the camera 50. The I/O interface 78 is a circuit for performing transmission and reception of data signals with the touch panel 11, the card reader 12, the printer 13, the scanner 14, the hand scanner 15, the cash processing machine 16, the lamp 17, and the speaker 18.

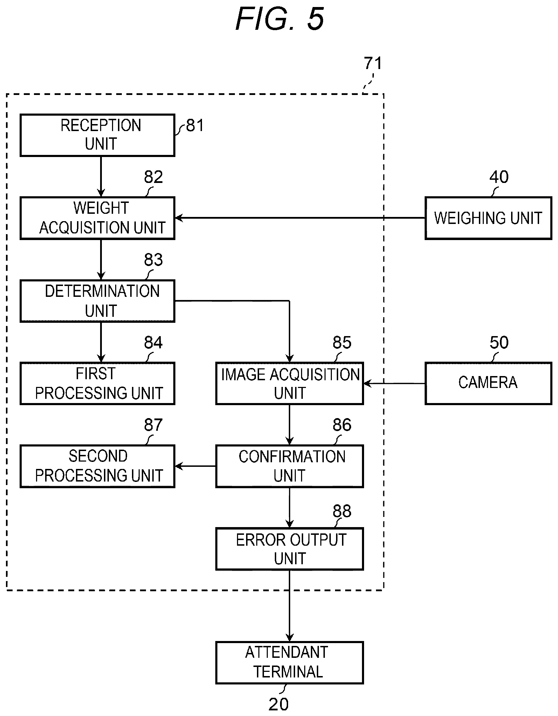

FIG. 5 is a block diagram showing a functional configuration of the commodity sales data processing apparatus 10. In the commodity sales data processing apparatus 10, the processor 71 functions as a reception unit 81, a weight acquisition unit 82, a determination unit 83, a first processing unit 84, an image acquisition unit 85, a confirmation unit 86, a second processing unit 87, and an error output unit 88 in order to make it possible to realize smooth commodity registration by suppressing errors when a purchaser correctly registers a commodity.

The reception unit 81 provides a function of receiving a registration operation of a purchased commodity by the purchaser. The reception unit 81 receives, as a signal generated by the registration operation of the purchased commodity, a signal input to the I/O interface 78 in response to the barcode of the barcode symbol attached to the purchased commodity being read by the scanner 14 or the hand scanner 15. This signal includes the commodity code converted into the barcode. Further, the reception unit 81 receives, as a signal generated by the registration operation of the purchased commodity, a signal input to the I/O interface 78 in response to the selection operation being performed on the purchased commodity from the list on the barcode-less commodity list screen displayed on the touch panel 11. This signal includes the commodity code of the purchased commodity on which the selection operation is performed.

The weight acquisition unit 82 provides a function of acquiring a load weight of the loading unit, i.e., the commodity the registration operation of which is received. The loading unit is the second commodity loading table 103. The weight acquisition unit 82 acquires weight data measured by the weighing scale 40 as the load weight to the loading unit.

The determination unit 83 provides a function of determining whether to allow the registration processing of the purchased commodity based on the load weight. When the purchased commodity the registration operation of which is received by the reception unit 81 is placed on the second commodity loading table 103, the load weight acquired by the weight acquisition unit 82 increases by the weight of that purchased commodity. The determination unit 83 confirms whether the increased weight is within an allowable range of the standard weight with respect to the purchased commodity. When the increased weight is within the allowable range of the standard weight with respect to the purchased commodity, the determination unit 83 allows the registration processing of the purchased commodity. When the increased weight is out of the allowable range of the standard weight with respect to the purchased commodity, the determination unit 83 does not allow the registration processing of the purchased commodity.

The first processing unit 84 provides a function of performing the registration processing on the sales data of that purchased commodity when the determination unit 83 determines that the registration processing of the purchased commodity is allowed. When it is determined that the registration processing of the purchased commodity is allowed, the first processing unit 84 generates commodity sales data including the commodity code, the commodity name, the price, a sales volume, a sales amount, and so on of that purchased commodity, and then performs the registration processing of the commodity sales data to a transaction memory. The transaction memory is reserved in a part of the volatile memory area in the main memory 72.

The image acquisition unit 85 provides a function of acquiring an image obtained by imaging the purchased commodity placed on the loading unit. The purchased commodity placed on the loading unit, that is, the second commodity loading table 103 is imaged by the camera 50. The image acquisition unit 85 acquires the image taken by the camera 50 via the camera interface 77.

The confirmation unit 86 provides a function of confirming whether the purchased commodity received by the reception unit 81 shows up in the image acquired by the image acquisition unit 85. The confirmation unit 86 acquires an appearance image of the purchased commodity received by the reception unit 81 from the commodity master file 60 to confirm whether an image similar to that appearance image is included in the images taken by the camera 50.

The second processing unit 87 provides a function of performing the registration processing on the sales data of that purchased commodity when the confirmation unit 86 confirms that the purchased commodity shows up in the image although the determination unit 83 determined that the registration processing of the purchased commodity is not allowed. When the determination unit 83 determines that the registration processing of the purchased commodity is not allowed, the confirmation unit 86 confirms whether the purchased commodity shows up in the image. When it is confirmed that the purchased commodity shows up in the image, the second processing unit 87 generates the commodity sales data including the commodity code, the commodity name, the price, the sales volume, the sales amount, and so on of that purchased commodity, and then performs the registration processing of the commodity sales data to the transaction memory.

The error output unit 88 provides a function of outputting an error when the determination unit 83 determines that the registration processing of the purchased commodity is not allowed, and when the confirmation unit 86 fails to confirm that the purchased commodity shows up in the image. When the determination unit 83 determines that the registration processing of the purchased commodity is not allowed, the confirmation unit 86 confirms whether the purchased commodity shows up in the image. When it is confirmed that the purchased commodity does not show up in the image, the error output unit 88 outputs an error signal to the attendant terminal 20. Further, the error output unit 88 lights or blinks the lamp 17 with a predetermined color to inform the attendant of an occurrence of the error.

The attendant terminal 20 which received the error signal displays, on the display, an image which gives notice of that the registration resulted in error since the load weight to the second commodity loading table 103 indicated an abnormal value in the commodity sales data processing apparatus 10 which is a transmission source of the error signal. It results in that an attendant who confirmed this image moves to the installation place of the commodity sales data processing apparatus 10 in which the error occurs to operate the commodity sales data processing apparatus 10 so as to cope with the error.

The functions as the reception unit 81, the weight acquisition unit 82, the determination unit 83, the first processing unit 84, the image acquisition unit 85, the confirmation unit 86, the second processing unit 87, and the error output unit 88 described above are realized by information processing executed by the processor 71 in accordance with a commodity sales data processing program.

The commodity sales data processing program is a kind of application programs stored in the main memory 72 or the auxiliary storage device 73. A method of installing the commodity sales data processing program in the main memory 72 or the auxiliary storage device 73 is not particularly limited. The commodity sales data processing program can be installed in the main memory 72 or the auxiliary storage device 73 by recording the commodity sales data processing program on a removable, non-transitory computer-readable recording medium, or delivering the commodity sales data processing program with communication via the communication network NW. The recording medium may have any configuration providing the recording medium is capable of storing the programs and is capable of being read by the device similarly to a CD-ROM, a memory card, or the like.

### [Description of Commodity Sales Data Processing Program]

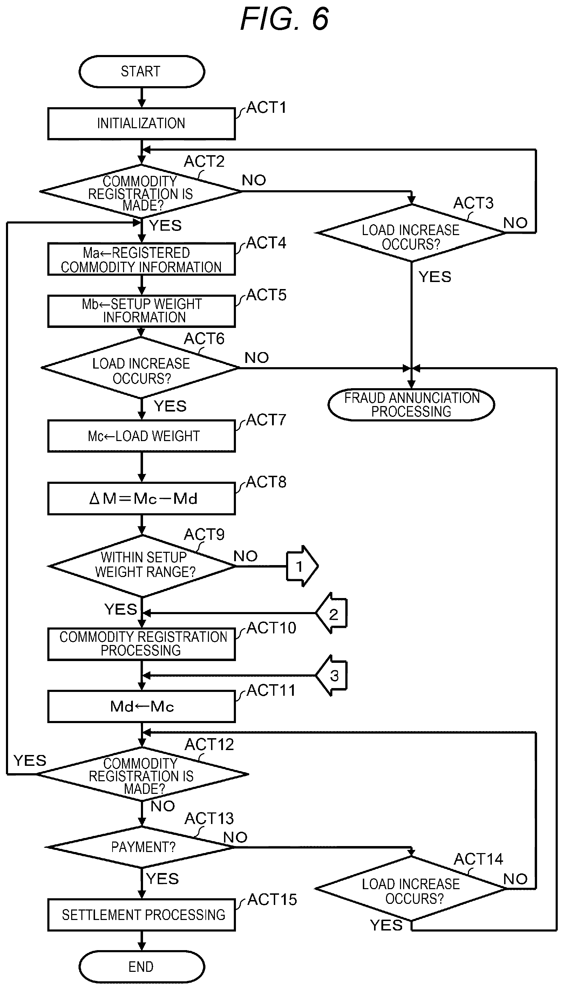

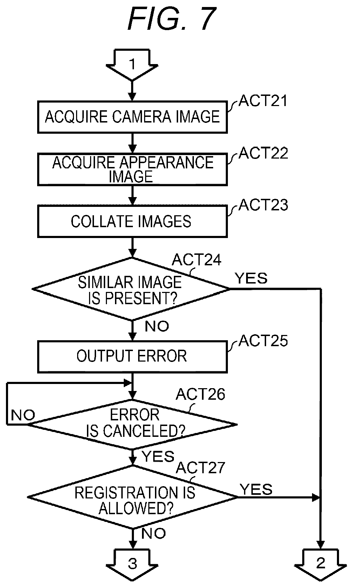

FIG. 6 and FIG. 7 are flowcharts representing information processing executed by the commodity sales data processing apparatus 10 in accordance with the commodity sales data processing program. When a touch operation is performed on the start key of the settlement start screen, the commodity sales data processing program starts. The processor 71 performs initialization as ACT1. This initialization clears the transaction memory. Further, a registered commodity memory Ma, a standard weight memory Mb, a this-time weight memory Mc, and a previous-time weight memory Md are also cleared. The registered commodity memory Ma, the standard weight memory Mb, the this-time weight memory Mc, and the previous-time weight memory Md are all reserved in a part of the volatile memory area in the main memory 72 similarly to the transaction memory.

When finishing the initialization, the processor 71 proceeds to ACT2. As ACT2, the processor 71 confirms whether the commodity registration is performed. When the commodity registration is not performed, the processor 71 proceeds to ACT3. As ACT3, the processor 71 confirms whether the weight measured by the weighing scale 40 increased. When the weight is not increased, the processor 71 returns to ACT2. In such a manner, the processor 71 after the initialization waits for the execution of the commodity registration or an increase in the weight as ACT2 and ACT3. It should be noted that when another input is detected in this waiting state, the processor 71 executes information processing corresponding to that input.

In the waiting state in ACT2 and ACT3, when the weight increases, the processor 71 makes the transition to fraud notification processing. An increase in the weight to the second commodity loading table 103 without performing the commodity registration leads to a presumption that the purchaser performed a fraud operation of bagging the purchased commodity without the registration. As the fraud notification processing, the processor 71 emits a warning sound from, for example, the speaker 18, and at the same time, lights or blinks the lamp 17 with a predetermined color to let the attendant know that the fraud operation was detected.

In the waiting state in ACT2 and ACT3, when the barcode of the purchased commodity is scanned by the scanner 14 or the hand scanner 15, or when the selection operation of the purchased commodity from the barcode-less commodity list screen is performed, the processor 71 determines that the commodity registration is performed. The processor 71 proceeds to ACT4. As ACT4, the processor 71 writes registered commodity information into the registered commodity memory Ma. Further, as ACT5, the processor 71 writes standard weight information into the standard weight memory Mb. The registered commodity information is information of the commodity code, the commodity name, the price, and the attribute out of the items described in the commodity record 61 of the purchased commodity stored in the commodity master file 60. The standard weight information is information of the standard weight (W), the first allowable range (-α), and the second allowable range (+α) out of the items described in the same commodity record 61.

The processor 71 then proceeds to ACT6. The processor 71 confirms whether the weight is increased within a predetermined time. The predetermined time is time, such as 5 seconds, sufficient to bag the purchased commodity registered by the purchaser to the apparatus main body 101 in the plastic store bag, the own bag, or the like prepared on the second commodity loading table 103.

When the weight is not increased within the predetermined time from when the commodity registration is performed, it is assumed that a fraud in which the purchased commodity is not bagged was made. The processor 71 executes substantially the same fraud notification processing as described above.

When the weight is increased within the predetermined time from when the commodity registration is performed, the processor 71 proceeds to ACT7. As ACT7, the processor 71 acquires the weight measured by the weighing scale 40 to describe it in the this-time weight memory Mc. Subsequently, as ACT8, the processor 71 calculates a difference ΔM between a value of the this-time weight memory Mc and a value of the previous-time weight memory Md. The difference ΔM is assumed to be the weight of the purchased commodity placed on the second commodity loading table 103. As ACT9, the processor 71 confirms whether the difference ΔM is within the allowable range of the standard weight stored in the standard weight memory Mb. That is, the processor 71 confirms whether an inequality of (W-α) ≤ ΔM ≤ (W+α) is true.

When the inequality is true, that is, when it is confirmed that the weight newly added to the second commodity loading table 103 is within the standard weight allowable range of the purchased commodity thus registered, the processor 71 proceeds to ACT10. As ACT10, the processor 71 executes commodity registration processing. That is, the processor 71 generates commodity sales data including the commodity code, the commodity name, and the price stored in the registered commodity memory Ma, the sales volume, the sales amount, and so on, and then performs the registration processing of the commodity sales data into the transaction memory.

The processor 71 proceeds to ACT11 after the commodity registration processing is finished. As ACT11, the processor 71 copies the value of the this-time weight memory Mc to the previous-time weight memory Md. Subsequently, the processor 71 proceeds to ACT12. As ACT12, the processor 71 confirms whether the commodity registration was performed. When the commodity registration was not performed, the processor 71 proceeds to ACT13. As ACT13, the processor 71 confirms whether a touch operation was performed on the payment key in the commodity registration screen. When the touch operation was not performed on the payment key, the processor 71 proceeds to ACT14. As ACT14, the processor 71 confirms whether the weight measured by the weighing scale 40 is increased. When the weight has not increased, the processor 71 returns to ACT12. In such a manner, the processor 71 then waits for the execution of the commodity registration, the touch operation on the payment key, or an increase in the weight to the second commodity loading table 103 as ACT12, ACT13, and ACT14. It should be noted that when another input is detected in this waiting state, the processor 71 may execute information processing corresponding to that detected input.

In the waiting state in ACT12 to ACT14, when the weight increases, the processor 71 makes the transition to the fraud notification processing.

When the registration of the purchased commodity is performed in the waiting state in ACT12 to ACT14, the processor 71 returns to ACT4. The processor 71 executes the processing in and after ACT4 in substantially the same manner as described above.

When the touch operation is performed on the payment key in the waiting state in ACT12 to ACT14, the processor 71 proceeds to ACT15. As ACT15, the processor 71 executes settlement processing. That is, the processor 71 sets the payment method selection screen as the screen of the touch panel 11. Then, for example, when cash is selected as the payment method, the processor 71 executes the settlement processing with cash in cooperation with the cash processing machine 16. For example, when credit is selected as the payment method, the processor 71 executes the settlement processing with a credit card in cooperation with the card reader 12. When another payment method is selected, the processor 71 executes the settlement processing corresponding to that payment method. When finishing the settlement processing, the processor 71 ends the information processing in accordance with the commodity sales data processing program.

If the inequality is not true in ACT9, that is, when the weight newly added to the second commodity loading table 103 is out of the standard weight allowable range of the purchased commodity thus registered, the processor 71 proceeds to ACT21 in FIG. 7. The processor 71 acquires an image taken by the camera 50 as ACT21. Further, the processor 71 acquires an appearance image of the purchased commodity as ACT22. That is, the processor 71 acquires the data of the appearance image from the commodity record 61 including the commodity code and so on stored in the registered commodity memory Ma.

The processor 71 then proceeds to ACT23. The processor 71 collates the taken image by the camera 50 with the appearance image of the purchased commodity as ACT23. The processor 71 confirms whether an image similar to the appearance image of the purchased commodity is included in the image from the camera 50 as ACT24. For example, when it is confirmed that an item in the image taken by the camera 50 is similar to the shape, the color shade of a surface, the pattern, the contrast condition, and so on expected for the purchased commodity, the processor 71 determines that the image from the camera 50 is similar to the appearance image of the purchased commodity.

When the image is similar to the appearance image, the processor 71 proceeds to ACT10 in FIG. 6. That is, the processor 71 executes the commodity registration processing. Then, when the commodity registration processing is finished, the processor 71 copies the value of the this-time weight memory Mc to the previous-time weight memory Md. The processor 71 returns to the waiting state in ACT12 to ACT14.

On the other hand, when the item in image taken by camera 50 is not similar to the appearance image of the purchased commodity, the processor 71 proceeds to ACT25. The processor 71 outputs a registration error of the purchased commodity as ACT25. That is, the processor 71 outputs the error signal to the attendant terminal 20. Further, the processor 71 lights or blinks the lamp 17 with a predetermined color to inform the attendant of an occurrence of the error.

The processor 71 proceeds to ACT26. As ACT26, the processor 71 waits for a cancellation of the error. The attendant who confirmed that the registration error occurred moves to the installation place of the commodity sales data processing apparatus 10 to perform an operation for canceling the error. On this occasion, the attendant makes a command on whether to allow the commodity registration which resulted in error.

When the error is canceled, the processor 71 proceeds to ACT27. As ACT27, the processor 71 confirms whether to allow the commodity registration which resulted in error. When there is a command to allow the commodity registration when canceling the error, the processor 71 proceeds to ACT10 in FIG. 6. That is, the processor 71 executes the commodity registration processing. Then, when the commodity registration processing is finished, the processor 71 copies the value of the this-time weight memory Mc to the previous-time weight memory Md. The processor 71 returns to the waiting state in ACT12 to ACT14.

In contrast, when there was a command not to allow the registration, the processor 71 proceeds to ACT11 in FIG. 6. That is, the processor 71 copies the value of the this-time weight memory Mc to the previous-time weight memory Md, and then returns to the waiting state in ACT12 to ACT14.

In this way, the processor 71 realizes the function as the reception unit 81 with the processing in ACT2 or ACT12 and the processing in ACT4 and ACT5. The processor 71 realizes the function as the weight acquisition unit 82 with the processing in ACT6 and ACT7. The processor 71 realizes the function as the determination unit 83 with the processing in ACT8 and ACT9. The processor 71 realizes the function as the first processing unit 84 with the processing in ACT10 subsequent to ACT9. The processor 71 realizes the function as the image acquisition unit 85 with the processing in ACT21. The processor 71 realizes the function as the confirmation unit 86 with the processing in ACT22 to ACT24. The processor 71 realizes the function as the second processing unit 87 with the processing in ACT10 subsequent to ACT24. The processor 71 realizes the function as the error output unit 88 with the processing in ACT25.

### [Description of Function of Commodity Sales Data Processing Apparatus]

In ACT9 in FIG. 6, a [first case] and a [second case] described below are conceivable as an event in which the difference ΔM between the value of the this-time weight memory Mc and the value of the previous-time weight memory Md becomes out of the standard weight allowable range of the purchased commodity registration of which was received.

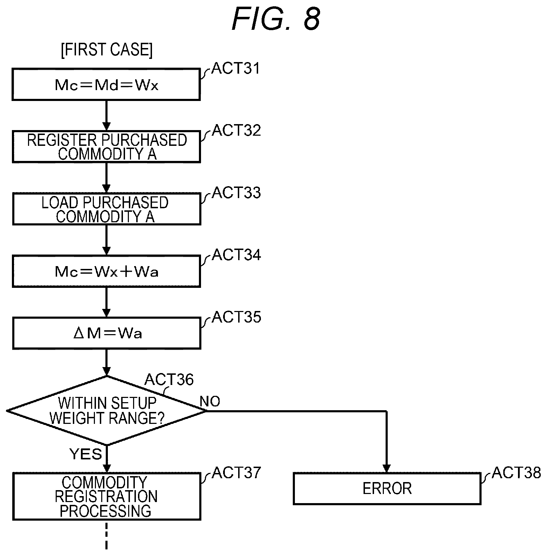

FIG. 8 is a flowchart representing information processing of the first case. When the initialization is performed in ACT1 in FIG. 6, or when the value Wx of the this-time weight memory Mc is copied to the previous-time weight memory Md in ACT11, the this-time weight memory Mc and the previous-time weight memory Md become equal in value Wx (ACT31). In this state, when the purchaser operates the apparatus main body 101 by him- or herself to register (ACT32) a purchased commodity A, and then places (ACT33) the purchased commodity A on the second commodity loading table 103 within a predetermined time, the value of the this-time weight memory Mc increases (ACT34) by the weight Wa of the purchased commodity A. As a result, a value Wa obtained by subtracting the value Wx of the previous-time weight memory Md from the value [Wx+Wa] of the this-time weight memory Mc is calculated (ACT35) as the difference ΔM.

Here, when the weight Wa of the commodity A is within the allowable range of the standard weight W of that commodity A, that is, when (W-α) ≤ ΔM(Wa) ≤ (W+α) is true (YES in ACT36), the commodity registration processing of the purchased commodity Ais executed (ACT37).

In contrast, when the purchased commodity A is a commodity having the attribute of the irregular, that is, vegetable, fruit, or the like which varies in weight of an individual product, the weight Wa of the purchased commodity A may be out of the allowable range of the standard weight of the commodity A, that is, (W-α) ≤ ΔM(Wa) ≤ (W+α) may be not true in some cases. When the inequality described above is not true (NO in ACT36), the registration of the purchased commodity A results in error (ACT38).

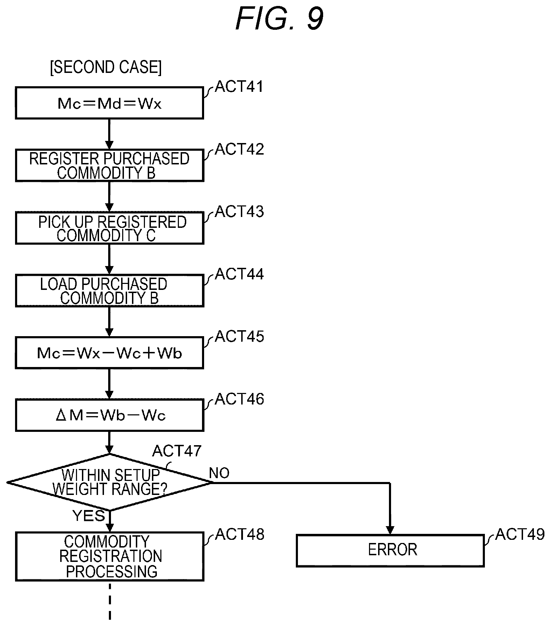

FIG. 9 is a flowchart representing information processing of the second pattern. When the initialization is performed in ACT1 in FIG. 6, or when the value Wx of the this-time weight memory Mc is copied to the previous-time weight memory Md in ACT11, the this-time weight memory Mc and the previous-time weight memory Md become equal in value Wx (ACT41). In this state, the purchaser operates the apparatus main body 101 by him- or herself to register (ACT42) a purchased commodity B, and then, places (ACT44) the purchased commodity B on the second commodity loading table 103 within the predetermined time. However, before placing the purchased commodity B on the second commodity loading table 103, a registered commodity C which was already bagged is picked up (ACT43) from the second commodity loading table 103.

For example, when the registered commodity C is picked up from a plastic store bag to bag the purchased commodity B since the plastic store bag is full corresponds to the event in ACT42 to ACT44. In this case, the value of the this-time weight memory Mc becomes a value obtained by adding the weight Wb of the purchased commodity B to a value obtained by subtracting the weight Wc of the registered commodity C from the value Wx of the previous-time weight memory Md (ACT45). As a result, a value [Wb-Wc] obtained by subtracting the value Wx of the previous-time weight memory Md from the value [Wx-Wc+Wb] of the this-time weight memory Mc is calculated (ACT46) as the difference ΔM. If the difference ΔM is within the standard weight range of the purchased commodity B (YES in ACT47), the commodity registration processing of the purchased commodity B is executed (ACT48). However, in reality, the difference ΔM becomes out of the standard weight range of the purchased commodity B (NO in ACT47). Therefore, the registration of the purchased commodity B results in error (ACT48).

Incidentally, a conventional commodity sales data processing apparatus of this kind outputs a registration error related to the weight at a time point when the difference ΔM becomes out of the standard weight range of the purchased commodity, that is, at a time point of ACT38 in FIG. 8, or a time point of ACT 49 in FIG. 9. Therefore, an error cancellation operation by the attendant is required.

In contrast, the commodity sales data processing apparatus 10 in the present embodiment does not output the registration error at the time point when the difference ΔM becomes out of the standard weight range of the purchased commodity. As shown in FIG. 6 and FIG. 7, when the difference ΔM becomes out of the standard weight range of the purchased commodity (NO in the ACT9 in FIG. 6), the commodity sales data processing apparatus 10 acquires (ACT21 in FIG. 7) the taken image by the camera 50. Then, the commodity sales data processing apparatus 10 confirms (ACT22 to ACT24 in FIG. 7) whether the image of the purchased commodity shows up in this taken image. When the image of the purchased commodity shows up in the taken image by the camera 50 (YES in ACT24 in FIG. 7), the commodity sales data processing apparatus 10 executes (ACT10 in FIG. 6) the registration processing of the purchased commodity.

The fact that the image of the purchased commodity shows up in the taken image by the camera 50 guarantees that the purchaser correctly bagged the purchased commodity on which the registration operation was performed. That is, it is conceivable that the difference ΔM becomes out of the standard weight range of the purchased commodity is caused by the purchased commodity of an irregular product, or a registered commodity was picked up from the second commodity loading table 103 before bagging the purchased commodity. In the present embodiment, no error is output with respect to such an event. Therefore, since the frequency of incorrect notifications can be reduced after the registration of the purchased commodity, the smooth commodity registration can be realized.

On the other hand, the fact that the image of the purchased commodity does not show up in the taken image by the camera 50 leads to a presumption that the purchaser did not correctly bag the purchased commodity on which the registration operation was performed. Such an event may occur when, for example, another commodity different from the purchased commodity on which the registration operation was performed is illegally bagged. Since the error is output with respect to such a fraud, such a fraud as described above can be prevented.

### <Second Embodiment>

Next, the commodity sales data processing apparatus 10 according to a second embodiment will be described. The difference between the first and second embodiments is the function of the confirmation unit 86. Since the second embodiment is substantially the same in the other points as the first embodiment, FIG. 1 to FIG. 6, FIG. 8, and FIG. 9 are also applied directly in the second embodiment, and the description thereof will be omitted.

In the first embodiment, the confirmation unit 86 provides the function of acquiring the appearance image set in advance to the purchased commodity received in the reception unit 81 to confirm whether an image similar to the appearance image shows up in the taken image by the camera 50 acquired by the image acquisition unit 85. In the second embodiment, the confirmation unit 86 provides a function of confirming whether an act of the purchaser of placing the purchased commodity received in the reception unit 81 on the loading unit, that is, the second commodity loading table 103 shows up in the taken image by the camera 50 acquired by the image acquisition unit 85. Further, the confirmation unit 86 also provides a function of confirming whether an act of the purchaser of placing the purchased commodity received in the reception unit 81 on the second commodity loading table 103 and an act of picking up the purchased commodity from the second commodity loading table 103 show up in the taken image by the camera 50.

Therefore, the camera 50 is suitable not only to take a picture of the commodity to be bagged on the second commodity loading table 103 taking a range in which the upper surface of the second commodity loading table 103 shows up as the imaging area, but also to take a picture of an act of the purchaser taking a range in which at least arms of the purchaser who performs the bagging operation of the commodity show up as the imaging area.

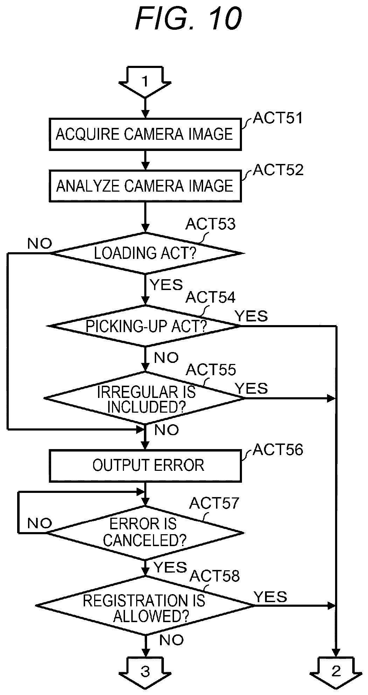

FIG. 10 is a flowchart representing information processing executed by the commodity sales data processing apparatus 10 in accordance with the commodity sales data processing program in the second embodiment. Specifically, it represents a processing procedure after the difference ΔM between the value of the this-time weight memory Mc and the value of the previous-time weight memory Md becomes out of the standard weight range of the purchased commodity registration of which is received, that is, after the inequality (W-α) ≤ ΔM ≤(W+α) is not true in ACT9 in the procedure shown in FIG. 6.

When the inequality described above fails to be true in ACT9 in FIG. 6, the processor 71 proceeds to ACT51 in FIG. 10. The processor 71 acquires an image taken by the camera 50 as ACT51. Then, the processor 71 analyzes the taken image by the camera 50 to recognize the act of the purchaser as ACT52.

The act of the purchaser can be recognized using, for example, AI (Artificial Intelligence). That is, an AI model or the like to which a moving image showing the act of the purchaser can be input, and which then outputs classification data representing whether the act is an act of placing the purchased commodity on the loading unit or an act of picking up the purchased commodity from the loading unit may be provided. Further, the moving image showing the act of the purchaser and the classification data as correct answer data representing whether the act is a placing act or a picking-up act can be input to the AI as teaching or training data to allow the AI perform learning in advance of deployment. When it becomes out of the standard weight range after the purchaser performs an operation of correctly registering the commodity, the moving image showing the act of the purchaser is input to the AI, and the AI is made to output the classification data on whether the act is the placing act or the picking-up act.

As ACT53, the processor 71 confirms whether the placing act by the purchaser was successfully recognized from the taken image by the camera 50. The placing act is an act of placing the purchased commodity, on which the registration operation was performed, on the second commodity loading table 103. For example, an act of bagging the purchased commodity into a plastic store bag, an own bag, or the like prepared on the second commodity loading table 103 corresponds to the placing act.

When the placing act by the purchaser is successfully recognized from the taken image by the camera 50, the processor 71 proceeds to ACT54. As ACT54, the processor 71 confirms whether the picking-up act by the purchaser was successfully recognized from the taken image by the camera 50. The picking-up act means an act of picking up the purchased commodity which was registered from the second commodity loading table 103. For example, an act of picking up the purchased commodity from the plastic store bag or the own-bag since the plastic store bag or the own-bag is full corresponds to the picking-up act.

When the picking-up act by the purchaser was successfully recognized from the taken image by the camera 50, the processor 71 proceeds to ACT10 in FIG. 6. That is, the processor 71 executes the commodity registration processing. Then, when the commodity registration processing is finished, the processor 71 copies the value of the this-time weight memory Mc to the previous-time weight memory Md. The processor 71 returns to the waiting state in ACT12 to ACT14. In this way, for example, when both the picking-up act and the placing act are successfully recognized as the acts of the purchaser by the AI, the commodity registration is made valid without outputting an error.

When the picking-up act by the purchaser is not successfully recognized from the taken image by the camera 50 in ACT54, the processor 71 proceeds to ACT55. As ACT55, the processor 71 determines whether the purchased commodity on which the registration operation was performed is an irregular product of which out of the allowable range of the standard weight may be sold. That is, the processor 71 determines whether the purchased commodity is the commodity an irregular product of which may be sold based on the attribute of the registered commodity information written into the registered commodity memory Ma.

When the purchased commodity is the commodity an irregular product of which out of the allowable range of the standard weight may be sold, the processor 71 proceeds to ACT10 in FIG. 6. That is, the processor 71 executes the commodity registration processing. Then, when the commodity registration processing is finished, the processor 71 copies the value of the this-time weight memory Mc to the previous-time weight memory Md. The processor 71 returns to the waiting state in ACT12 to ACT14.

On the other hand, when the loading act by the purchaser is not successfully recognized from the taken image by the camera 50 in ACT53, or when the purchased commodity is not the commodity an irregular product of which out of the allowable range of the standard weight may be sold in ACT55, the processor 71 proceeds to ACT56. The processor 71 outputs the registration error of the purchased commodity as ACT56. That is, the processor 71 outputs the error signal to the attendant terminal 20. Further, the processor 71 lights or blinks the lamp 17 with a predetermined color to inform the attendant of an occurrence of the error.

The processor 71 proceeds to ACT57. As ACT57, the processor 71 waits for a cancellation of the error. When the error is canceled, the processor 71 proceeds to ACT58. As ACT58, the processor 71 confirms whether to allow the commodity registration which resulted in error. When there was a command to allow the commodity registration when canceling the error, the processor 71 proceeds to ACT10 in FIG. 6. That is, the processor 71 executes the commodity registration processing. Then, when the commodity registration processing is finished, the processor 71 copies the value of the this-time weight memory Mc to the previous-time weight memory Md. The processor 71 returns to the waiting state in ACT12 to ACT14.

In contrast, when there was a command not to allow the registration, the processor 71 proceeds to ACT11 in FIG. 6. That is, the processor 71 copies the value of the this-time weight memory Mc to the previous-time weight memory Md, and then returns to the waiting state in ACT12 to ACT14.

In this way, when the difference ΔM between the value of the this-time weight memory Mc and the value of the previous-time weight memory Md becomes out of the standard weight range of the purchased commodity the registration of which was received, the commodity sales data processing apparatus 10 in the second embodiment analyzes the taken image by the camera 50. Then, whether the placing act by the purchaser was successfully recognized is confirmed. When the placing act was recognized, the commodity sales data processing apparatus 10 confirms whether the picking-up act by the purchaser was successfully recognized. When not only the loading act but also the picking-up act were recognized, the commodity sales data processing apparatus 10 executes the registration processing of the purchased commodity.

The fact that the loading act and the picking-up act by the purchaser were recognized means that the event in which the difference ΔM between the value of the this-time weight memory Mc and the value of the previous-time weight memory Md becomes out of the standard weight range of the purchased commodity the registration of which was received corresponds to the [second pattern] described in FIG. 9. That is, in the second embodiment, when it becomes out of the standard weight range in the second case, it does not result in error, and the registration of the purchased commodity becomes valid.

Further, when the picking-up act by the purchaser is not recognized, the commodity sales data processing apparatus 10 checks the attribute of the purchased commodity. Then, when the purchased commodity is the commodity an irregular product of which out of the allowable range of the standard weight may be sold, the commodity sales data processing apparatus 10 executes the registration processing of the purchased commodity.

The fact that the purchased commodity is the irregular product means that the event in which the difference ΔM between the value of the this-time weight memory Mc and the value of the previous-time weight memory Md becomes out of the standard weight range of the purchased commodity the registration of which was received corresponds to the first case described in FIG. 8. That is, in the second embodiment, when it becomes out of the standard weight range in the first case, it does not result in error, and the registration of the purchased commodity becomes valid.

As described hereinabove in detail, in the commodity sales data processing apparatus 10 in the second embodiment, the frequency of erroneous notifications after the registration of the purchased commodity can be reduced, and thereby the smooth commodity registration can be achieved.

Moreover, although it is necessary to prepare the data of the appearance image for each commodity in the first embodiment, in the second embodiment, there is no need to prepare the data of the appearance image, and thus, the data amount of the commodity master file 60 can be reduced.

### <Third Embodiment>

Next, the commodity sales data processing apparatus 10 according to a third embodiment will be described. In the third embodiment, the function of the confirmation unit 86 is different from the second embodiment. Since the third embodiment is substantially the same in the other points as the second embodiment, FIG. 1 to FIG. 6, FIG. 8, and FIG. 9 are also applied directly in the third embodiment, and the description thereof will be omitted.

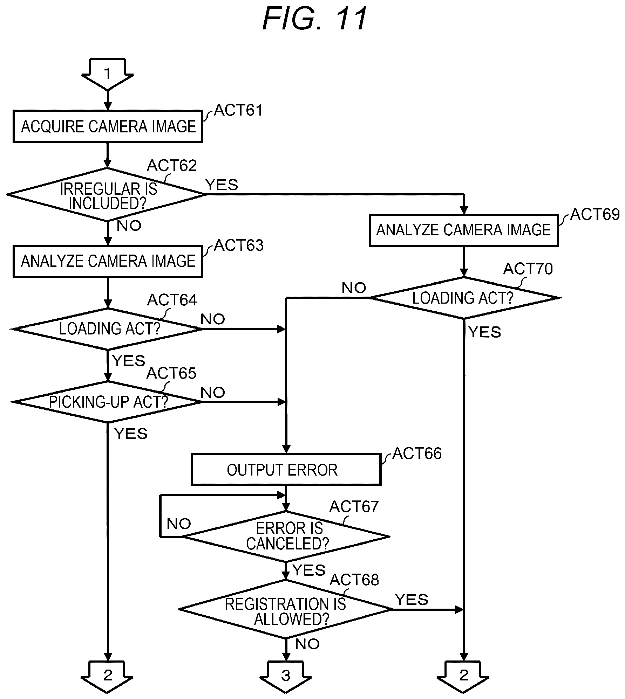

FIG. 11 is a flowchart representing information processing executed by the commodity sales data processing apparatus 10 in accordance with the commodity sales data processing program in the third embodiment. Specifically, it represents a processing procedure after the difference ΔM between the value of the this-time weight memory Mc and the value of the previous-time weight memory Md becomes out of the standard weight range of the purchased commodity registration of which is received, that is, after the inequality (W-α) ≤ ΔM ≤ (W+α) is not true in ACT9 in the procedure shown in FIG. 6.

When the inequality described above fails to be true in ACT9 in FIG. 6, the processor 71 proceeds to ACT61 in FIG. 11. The processor 71 acquires an image taken by the camera 50 as ACT61.

When the processor 71 acquires the taken image by the camera 50, the processor 71 proceeds to ACT62. As ACT62, the processor 71 determines whether the purchased commodity on which the registration operation was performed is a commodity an irregular product of which out of the allowable range of the standard weight may be sold. That is, the processor 71 determines whether the purchased commodity is the commodity an irregular product of which may be sold based on the attribute of the registered commodity information written into the registered commodity memory Ma.

When the purchased commodity is not the commodity an irregular product of which out of the allowable range of the standard weight may be sold, the processor 71 proceeds to ACT63. The processor 71 analyzes the taken image by the camera 50 to recognize the act of the purchaser as ACT63.

As ACT64, the processor 71 confirms whether the loading act by the purchaser was successfully recognized from the taken image by the camera 50. When the loading act was successfully recognized, the processor 71 proceeds to ACT65. As ACT65, the processor 71 confirms whether the picking-up act by the purchaser was successfully recognized from the taken image by the camera 50.

When not only the placing act but also the picking-up act were successfully recognized, the processor 71 proceeds to ACT10 in FIG. 6. That is, the processor 71 executes the commodity registration processing. Then, when the commodity registration processing is finished, the processor 71 copies the value of the this-time weight memory Mc to the previous-time weight memory Md. The processor 71 returns to the waiting state in ACT12 to ACT14.

In contrast, when the placing act was not successfully recognized in ACT64, or when the picking-up act was not successfully recognized in ACT65, the processor 71 proceeds to ACT66. The processor 71 outputs the registration error of the purchased commodity as ACT66. That is, the processor 71 outputs the error signal to the attendant terminal 20. Further, the processor 71 lights or blinks the lamp 17 with a predetermined color to inform the attendant of an occurrence of the error.

The processor 71 proceeds to ACT67. As ACT67, the processor 71 waits for a cancellation of the error. When the error is canceled, the processor 71 proceeds to ACT68. As ACT68, the processor 71 confirms whether to allow the commodity registration which resulted in error. When there is a command to allow the commodity registration when canceling the error, the processor 71 proceeds to ACT10 in FIG. 6. That is, the processor 71 executes the commodity registration processing. Then, when the commodity registration processing is finished, the processor 71 copies the value of the this-time weight memory Mc to the previous-time weight memory Md. The processor 71 returns to the waiting state in ACT12 to ACT14.

In contrast, when there is a command not to allow the registration, the processor 71 proceeds to ACT11 in FIG. 6. That is, the processor 71 copies the value of the this-time weight memory Mc to the previous-time weight memory Md, and then returns to the waiting state in ACT12 to ACT14.

On the other hand, when the purchased commodity is the commodity an irregular product of which out of the allowable range of the standard weight may be sold in ACT62, the processor 71 proceeds to ACT69. The processor 71 analyzes the taken image by the camera 50 to recognize the act of the purchaser as ACT69.

As ACT70, the processor 71 confirms whether the placing act by the purchaser was successfully recognized from the taken image by the camera 50. When the loading act was successfully recognized, the processor 71 proceeds to ACT10 in FIG. 6. That is, the processor 71 executes the commodity registration processing. Then, when the commodity registration processing is finished, the processor 71 copies the value of the this-time weight memory Mc to the previous-time weight memory Md. The processor 71 returns to the waiting state in ACT12 to ACT14.

In contrast, when the loading act was not successfully recognized, the processor 71 proceeds to ACT66. The processor 71 executes the processing in and after ACT66 in substantially the same manner as described above.

In this way, also in the commodity sales data processing apparatus 10 according to the third embodiment, when it becomes out of the standard weight in the first case described using FIG. 8, or when it becomes out of the standard weight range in the second case described using FIG. 9, it does not result in error, and the registration of the purchased commodity becomes valid. Therefore, the frequency of erroneous notifications after the purchaser correctly registered the purchased commodity can be reduced, and thereby the smooth commodity registration can be realized.

### [Modified Examples]

In the embodiments described above, the this-time weight memory Mc and the previous-time weight memory Md are prepared, and whether the difference ΔM between the value of the this-time weight memory Mc and the value of the previous-time weight memory Md is within the standard weight range of the purchased commodity is determined in ACT9 in FIG. 6. Regarding this point, a memory which totalizes the standard weights of the purchased commodities on which the registration processing was performed as a single transaction, a so-called a standard weight totalizing memory, is provided instead of the previous-time weight memory. Then, whether the difference between the value of the this-time weight memory Mc and the value of the standard weight totalizing memory is within the standard weight range of the purchased commodity may be determined.

In the embodiments described above, the camera 50 is disposed for imaging the second commodity loading table 103 of each commodity sales data processing apparatus 10. In another embodiment, a single camera 50 can be used to make it possible to take pictures of the purchased commodities respectively placed on the second commodity loading tables 103 of a plurality of commodity sales data processing apparatuses 10. The processor 71 of each of the commodity sales data processing apparatuses 10 can extract a part of the image corresponding to the second commodity loading table 103 of its own apparatus from the taken image by the camera 50 to confirm whether the purchased commodity shows up, or the act of the purchaser. In this way, since the number of cameras 50 can be reduced compared to the number of commodity sales data processing apparatuses 10, the cost can be reduced.

The confirmation unit 86 may be realized using an AI. That is, an AI to which the appearance images of commodities can be input, and which outputs the commodity identification information can be used. Further, the appearance image of a commodity the associated correct (known) commodity identification information for the depicted commodity in the appearance image can be input to the AI as learning or training data to allow the AI to perform learning in advance of deployment. When the weight is out of the standard weight range after the purchaser correctly performs the operation to register the purchased commodity, the appearance image of the just registered commodity is input to the AI and the AI outputs the commodity identification information for that commodity. Then, by comparing the commodity identification information of the purchased commodity output from the AI and the registered commodity identification information of the purchased commodity, whether the registered purchased commodity registered is in the image acquired is checked.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the spirit of the disclosure. The accompanying claims and their equivalents are intended to cover such forms or modifications as would fall within the scope and spirit of the disclosure.

## Claims

1. A point-of-sale (POS) terminal comprising:
a first table (102) on which one or more commodities that have been registered for purchase can be placed;
a weight sensor (40) disposed in or under the first table;
a camera (50) positioned to image the first table;
a memory that stores a program and a plurality of commodity information each indicating a commodity, a weight range of the commodity, and a preset image of the commodity; and
a processor configured to execute the program to:
determine whether a first operation for registering a first commodity is input,
upon determining that the first operation is input, search the memory for first commodity information corresponding to the first commodity,
determine whether a weight measured by the weight sensor increases after the first operation,
upon determining that the measured weight increases, determine whether an increase in the measured weight is within a first weight range indicated by the first commodity information,
upon determining that the increase is within the first weight range, register the first commodity, and
upon determining that the increase is not within the first weight range,
determine whether a first image captured by the camera after the first operation shows the first commodity based on a first preset image indicated by the first commodity information,
upon determining that the first image shows the first commodity, register the first commodity, and
upon determining that the first image does not show the first commodity, issue an error signal.

2. The POS terminal according to claim 1, wherein
the processor executes the program to, after determining that the increase is not within the first weight range and before registering the first commodity, determine that a second image captured by the camera after the first operation shows a purchaser who is placing the first commodity on the first table.

3. The POS terminal according to claim 2, wherein
the processor executes the program to, after determining that the increase is not within the first weight range and before registering the first commodity, determine that a third image captured by the camera after the first operation shows the purchaser who is moving the first commodity on or above the first table.

4. The POS terminal according to any one of claims 1 to 3, wherein
each of the commodity information stored in the memory further indicates an attribute of the corresponding commodity, and
the processor executes the program to determine to register the first commodity based on a first attribute indicated by the first commodity information.

5. The POS terminal according to any one of claims 1 to 4, further comprising:
a main body including the memory and the processor and disposed adjacent to the first table.

6. The POS terminal according to claim 5, further comprising:
a second table on which one or more commodities that have not been registered can be placed, and
the main body is between the first and second tables.

7. The POS terminal according to claim 5 or 6, further comprising:
an input device connected to the main body and by which the first operation can be input.

8. The POS terminal according to any one of claims 1 to 7, further comprising:
a communication interface connectable to an attendant terminal, wherein
the error signal is transmitted to the attendant terminal through the communication interface.

9. The POS terminal according to any one of claim 1 to 8, further comprising:
a lamp for emitting light upon issuance of the error signal.

10. The POS terminal according to any one of claims 1 to 9, wherein
the POS terminal is a self-service POS terminal.

11. A checkout system comprising:
an attendant terminal (20) ; and
a point-of-sale (POS) terminal according to any one of claims 1 to 10.

12. The checkout system according to claim 11, further comprising:
a store server that stores the plurality of commodity information, wherein
the processor executes the program to acquire the plurality of commodity information from the store server.

13. A non-transitory computer readable storage medium that causes a computer to execute a method comprising:
storing in a memory a plurality of commodity information each indicating a commodity, a weight range of the commodity, and a preset image of the commodity;
determining whether a first operation for registering a first commodity is input;
upon determining that the first operation is input, searching the memory for first commodity information corresponding to the first commodity;
determining whether a weight measured by a weight sensor increases after the first operation, the weight sensor being disposed in or under a first table on which one or more commodities that have been registered can be placed;
upon determining that the measured weight increases, determining whether an increase in the measured weight is within a first weight range indicated by the first commodity information;
upon determining that the increase is within the first weight range, registering the first commodity; and
upon determining that the increase is not within the first weight range,
determining whether a first image captured by a camera after the first operation shows the first commodity based on a first preset image indicated by the first commodity information, the camera being positioned to image the first table,
upon determining that the first image shows the first commodity, registering the first commodity, and
upon determining that the first image does not show the first commodity, issuing an error signal.
